# EUROPÄISCHE PATENTSCHRIFT

(11) **EP 1 512 911 B1**
(45) Veröffentlichungstag und Bekanntmachung des Hinweises auf die Patenterteilung: **16.07.2008**
(21) Anmeldenummer: 04090314.8
(22) Anmeldetag: 13.08.2004
(51) Int. Cl.: F23R 3/08

(54) **Anordnung zur Kühlung hoch wärmebelasteter Bauteile**
Device for cooling high-thermally stressed parts
Arrangement pour refroidir des éléments soumis à de fortes contraintes thermiques

(30) Priorität: 04.09.2003 DE 10341515
(43) Veröffentlichungstag der Anmeldung: 09.03.2005
(73) Patentinhaber: Rolls-Royce Deutschland Ltd & Co KG, 15827 Dahlewitz (DE)
(72) Erfinder: Schreiber, Karl, 15806 Mellensee (DE)
(74) Vertreter: Wablat, Wolfgang

(56) Entgegenhaltungen:
- EP-A- 0 995 880
- WO-A-03/006883
- DE-A- 19 912 701
- US-A- 5 113 648
- US-A- 5 184 455
- US-A- 5 605 046

## Beschreibung

Die Erfindung betrifft eine Anordnung gemäß den Merkmalen des Oberbegriffs des Anspruches 1 zur Kühlung hoch wärmebelasteter Bauteile mit einem Kühlmedium, insbesondere der Brennkammer von Gasturbinen.

Bekanntermaßen sind verschiedene Bauteile einer Gasturbine, beispielsweise die Statorschaufeln und deren Plattformen oder die Brennkammer, in dem zu kühlenden Wandbereich mit einer Vielzahl sehr kleiner Kühlluftöffnungen oder -schlitze, beispielsweise mit einer Querschnittsfläche von jeweils ca. 1mm², versehen. Durch diese Vielzahl von Kühlluftöffnungen tritt von außen anströmende, auf die Außenfläche des Bauteils treffende Kühlluft auch durch den betreffenden Wandbereich des Bauteils hindurch, um an der Innenfläche der Wand einen Kühlluftschleier zu erzeugen und die Wand dadurch unmittelbar gegenüber den heißen Verbrennungsgasen abzuschirmen und unterhalb einer der maximalen thermischen Belastbarkeit des jeweiligen Bauteilwerkstoffs entsprechenden Temperatur zu halten.

Die Brennkammern von Flugtriebwerken werden bekanntermaßen aus einzelnen, durch spanlose und spangebende Formgebungsverfahren gefertigten Ringen, die durch Schweißen miteinander verbunden werden, hergestellt. In den umlaufenden Absätzen einer Z-förmig ausgebildeten Brennkammerwand sowie in dem jeweiligen Hitzeschutzschild im Bereich der Brenner werden durch Laserbohren in einer Größenordnung von mehreren Tausend feinste Kühlluftbohrungen erzeugt. Der Aufwand für das Laserbohren zur Herstellung der Kühlluftbohrungen steht mit einem bedeutenden Anteil in keinem wirtschaftlich vertretbaren Verhältnis zu den für die Herstellung der Brennkammer aufgewendeten Gesamtkosten.

Es ist bereits bekannt, die Brennkammern für Flugturbinen aus in einem Gießprozess gefertigten und durch Laserschweißen aneinander gefügten einzelnen Segmenten herzustellen, jedoch müssen die Kühlluftbohrungen auch in diesem Fall mit hohem Kostenaufwand unter Anwendung der Lasertechnik erzeugt werden, da es selbst mit modernsten Präzisionsgießverfahren nicht möglich ist, die Erzeugung der feinen Kühlluftöffnungen in den Gießprozess einzubinden.

In der WO 03/006883A1 wird die Kühlung von den heißen Gasen ausgesetzten Bauteilen einer Turbine beschrieben, wobei in der zu kühlenden Wand eine von der kalten Seite mit Kühlluft versorgte, mit einem porösen Material oder einem Gewebe gefüllte Kavität ausgebildet ist.

Bei einer aus der US-A-5 605 046 bekannten Kühlung für Bauteile von Gasturbinen sind zwischen einer Außenwand mit ersten Öffnungen und einer Innenwand mit einem Spaltgitter poröse Zwischenstücke angeordnet, wobei die Kühlluft zunächst in die zwischen Innenwand, Außenwand und Zwischenstücken freien Räume und dann über das poröse Material und die Spalte der Innenwand abströmt.

Eine hocheffiziente Filmkühlung ist dadurch nicht gewährleistet.

Der Erfindung liegt die Aufgabe zugrunde, eine Anordnung zur Kühlluftversorgung hoch wärmebelasteter Bauteile von Gasturbinen anzugeben, die mit geringem Fertigungsaufwand und damit kostengünstig hergestellt werden kann.

Erfindungsgemäß wird die Aufgabe mit einer Anordnung gemäß den Merkmalen des Patentanspruchs 1 gelöst. Vorteilhafte Weiterbildungen der Erfindungen ergeben sich aus den abhängigen Ansprüchen 2 bis 7.

Der grundlegende Erfindungsgedanke besteht bei einer zu kühlenden, gegen Heißgase abzuschirmenden Wandfläche des betreffenden Bauteils, in dem mindestens eine an der zu kühlenden Seite offene Kavität ausgebildet ist, in die von der gegenüberliegenden Wandfläche ausgehende, gießtechnisch herstellbare Kühlluftöffnungen zur Bereitstellung des erforderlichen Kühlluftvolumens münden, darin, dass die offene Seite der Kavität mit einem Drahtgewebe von bestimmter Offenheit abgedeckt ist. Die Kavität stellt dabei einen Druckspeicher für das kontinuierlich zugeführte Kühlmedium dar, dass über die Öffnungen in dem Drahtgewebe gleichmäßig abströmt und an der zu kühlenden und abzuschirmenden Wandfläche einen gleichmäßigen Kühlluftschleier bildet, sowie auch der Eigenkühlung des Drahtgewebes dient.

Das Drahtgewebe, das kraft- und/oder formschlüssig im Randbereich der Kavität befestigt ist und dessen Offenheit zwischen 5 und 95 % wählbar ist, kann gegenüber dem Bauteilwerkstoff aus einem thermisch höher belastbaren Material bestehen.

Die Kavität kann ein nutartiger Kanal mit über dessen Länge verteilt angeordneten Kühlluftöffnungen sein. Selbstverständlich können auch mehrere Kavitäten hintereinander und/oder parallel zueinander angeordnet sein.

Die erfindungsgemäße Kühlanordnung wird vorzugsweise zur Kühlung und Hitzeabschirmung bei Brennkammern von Gasturbinen eingesetzt, ist aber gleichermaßen bei anderen Bauteilen anwendbar.

Die Vorteile der Erfindung liegen in der kostengünstigen, auch gießtechnisch realisierbaren Fertigung, in der Gleichmäßigkeit des erzeugten Kühlluftschleiers und dessen Variabilität aufgrund der durch unterschiedliche Drahtgewebe variierbaren Offenheit des Drahtgewebes sowie in der Werkstoffentkopplung zwischen dem Bauteilwerkstoff und dem Drahtgewebewerkstoff in Verbindung mit der dadurch bedingten hohen mechanischen und thermischen Belastbarkeit. Insbesondere bei der gießtechnischen Herstellung können die Bauteile kostengünstig gefertigt werden, da die Ausbildung der Kühlluftöffnungen in den Gießprozess einbezogen werden kann.

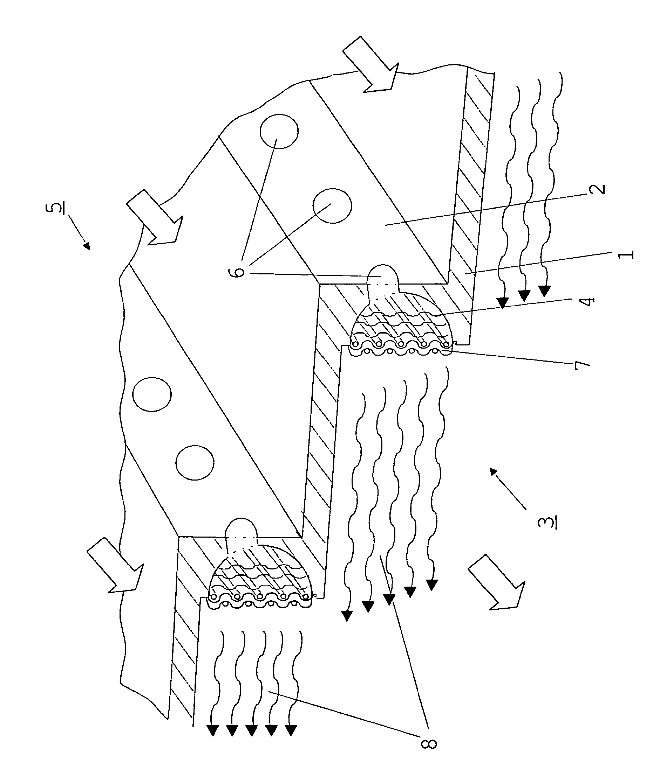

Ein Ausführungsbeispiel der Erfindung wird anhand der Zeichnung, in deren einziger Figur eine perspektivische Schnittansicht eines Teils einer Z-förmig ausgebildeten Wand der Brennkammer einer Gasturbine dargestellt ist, näher erläutert.

Die Wand 1 eines hier in einem Gießverfahren hergestellten Brennkammersegments einer Gasturbine weist aufgrund ihrer Z-förmigen Querschnittsform in definiertem Abstand Absätze 2 auf, in die an der Innenfläche der Wand, das heißt, der Luftaustrittsseite 3, eine Kavität 4 in Form eines an der Luftaustrittsseite 3 offenen Kanals eingeformt ist. In die Kavität 4 münden von der Außenfläche der Wand bzw. der Lufteintrittsseite 5 ausgehende Kühlluftöffnungen 6, deren Querschnittsfläche so groß ist, dass mit einer bestimmten Anzahl Kühlluftöffnungen 6 das für die Kühlung der Innenflächen der Wand 1 erforderliche Luftvolumen bereitgestellt werden kann und dass die Kühlluftöffnungen 6 bereits mit dem Gießprozess zur Herstellung der Brennkammersegmente ausgebildet werden können.

Die an der Wandinnenfläche bzw. Luftaustrittsseite vorgesehene Öffnung der Kavität 4 ist kraft- und/oder formschlüssig mit einem Drahtgewebe 7, das eine bestimmte Offenheit aufweist, "verschlossen". Während der Gusswerkstoff für die Wand 1 der Brennkammer bestimmten thermischen und mechanischen Anforderungen genügen muss, kann das Drahtgewebe aus einem anderen Werkstoff mit geringerer mechanischer, aber höherer thermischer Belastbarkeit bestehen. Beispielsweise sind als Gusswerkstoff ein Chromoxidbildner und als Drahtgewebewerkstoff ein thermisch höher beständiger Aluminiumoxidbildner vorgesehen.

Die an der Außenwandfläche (Lufteintrittsseite 5) der Brennkammer anströmende Kühlluft gelangt über die Kühlluftöffnungen 6 in die Kavität 4, in der ein gleichmäßiger Druck aufgebaut wird. Durch das Drahtgewebe 7 wird ein Luftschleier 8 erzeugt, der langsam entlang der Innenfläche (Luftaustrittsseite 3) der Brennkammer fließt und die Brennkammerwand gegenüber den heißen Gasen abschirmt und kühlt.

Die Erfindung ist nicht auf die zuvor am Beispiel der Brennkammer einer Flugzeugturbine beschriebene Ausführungsform beschränkt. Vielmehr ist der grundlegende Erfindungsgedanke, der in der Ausbildung einer über wenige, ausreichend große Kühlluftöffnungen versorgten und mit einem Drahtgewebe bestimmter Offenheit abgedeckten, als Druckspeicher dienenden Kavität an der abzuschirmenden Innenwandfläche des betreffenden Bauteils besteht, auch bei anderen Bauteilen, deren Innenfläche mit einem beliebigen Kühlmediumfilm abgeschirmt werden soll, anwendbar.

### Bezugszeichenliste

- 1: Wand (eines zu kühlenden Bauteils)
- 2: Absatz in 1
- 3: Luftaustrittsseite
- 4: Kavität
- 5: Lufteintrittsseite
- 6: Kühlluftöffnungen
- 7: Drahtgewebe
- 8: Kühlluftschleier

## Patentansprüche

1. Anordnung zur Kühlung hoch wärmebelasteter Bauteile, insbesondere der Brennkammer von Gasturbinen, mit in dem zu kühlenden Bauteil oder dessen Wand (1) ausgebildeten, an einer Lufteintrittsseite (5) mit Kühlluft beaufschlagten Kühlluftöffnungen (6) zur Ausbildung eines Kühlluftschleiers (8) an der Luftaustrittsseite (3) der Wand, wobei mindestens eine - auch gusstechnisch - einfach zu fertigende Kühlluftöffnung (6) in mindestens eine zur Luftaustrittsseite (3) hin offene Kavität (4) mündet, **dadurch gekennzeichnet, dass** die offene Seite der Kavität (4) mit einem in deren Randbereich kraft- und/oder formschlüssig befestigten hitzebeständigen, gasdurchlässigen Drahtgewebe (7) von bestimmter Offenheit zur Ausbildung eines Druckspeichers abgedeckt ist.

2. Anordnung nach Anspruch 1, **gekennzeichnet durch** eine Werkstoffentkopplung zwischen dem Bauteilmaterial und dem Drahtgewebematerial, wobei das Drahtgewebematerial aus einem thermisch höher belastbaren Werkstoff als das Bauteilmaterial besteht.

3. Anordnung nach Anspruch 1, **dadurch gekennzeichnet, dass** die geometrische Offenheit des Drahtgewebes (7) zwischen 5 und 95% liegt.

4. Anordnung nach Anspruch 3, **dadurch gekennzeichnet, dass** die Offenheit des Drahtgewebes (7) ca. 20% beträgt.

5. Anordnung nach einem der Ansprüche 1 bis 4, **dadurch gekennzeichnet, dass** das Bauteil eine Wand (1) einer Brennkammer ist und die Kavität (4) ein in die Innenfläche der Wand (1) eingeformter, am Innenumfang der Brennkammer umlaufender nutartiger Kanal mit über dessen Länge verteilt angeordneten Kühlluftöffnungen (6) ist oder von mehreren aufeinanderfolgenden Kanälen mit in diese mündenden Kühlluftöffnungen gebildet ist.

6. Anordnung nach Anspruch 5, **dadurch gekennzeichnet, dass** in der Wand (1) mehrere Kavitäten (4) in Form von Kanälen parallel übereinander ausgebildet sind.

7. Anordnung nach Anspruch 6, **dadurch gekennzeichnet, dass** die Kavität(en) (4) in die durch eine Z-Form der zu kühlenden Bauteilwand gebildeten Absätze (2) eingeformt ist (sind).

## Claims

1. Arrangement for the cooling of thermally highly loaded components, in particular the combustion chamber of gas turbines, in which cooling air openings (6) are provided in the component or its wall (1) to be cooled, which are supplied with cooling air at an air inlet side (5), to form a cooling air film (8) at the air outlet side (3) of the wall with at least one cooling air opening (6), which is easily manufacturable, also by casting, issuing into at least one cavity (4), which is open to the air exit side (3), **characterized in that** the open side of the cavity (4) is covered by a heat-resistant, gas-permeable wire mesh (7) of a certain permeability to form a pressure accumulator, with the wire mesh (7) being positively and/or conformally connected to the rim area of the cavity (4).

2. Arrangement in accordance with Claim 1, **characterized by** isolation between the materials of the component and the wire mesh, with the wire mesh material having a higher thermal loadability than the component material.

3. Arrangement in accordance with Claim 1, **characterized in that** the geometrical permeability of the wire mesh (7) is between 5 and 95%.

4. Arrangement in accordance with Claim 3, **characterized in that** the permeability of the wire mesh (7) is approximately 20%.

5. Arrangement in accordance with one of the Claims 1 to 4, **characterized in that** the component is a wall (1) of a combustion chamber and the cavity (4) is provided by a groove-style channel which extends along the inner circumference of the combustion chamber and is formed into the inner surface of the wall (1), with cooling air openings (6) being distributed over the channel length, or the cavity is provided by several, subsequent channels, with cooling air openings issuing into these channels.

6. Arrangement in accordance with Claim 5, **characterized in that** several channel-style cavities (4) are arranged parallelly and one above the other in the wall (1).

7. Arrangement in accordance with Claim 6, **characterized in that** the cavity (cavities) (4) is (are) formed into the steps (2) resulting from the Z-shape of the component wall to be cooled.

## Revendications

1. Structure destinée à refroidir des composants soumis à de fortes contraintes thermiques, en particulier la chambre de combustion de turbines à gaz, avec des orifices de refroidissement (6) pratiqués dans le composant à refroidir ou dans sa paroi (1) et alimentés en air de refroidissement d'un côté d'entrée d'air (5) afin de former un voile d'air de refroidissement (8) du côté de sortie d'air (3) de la paroi, sachant qu'au moins un orifice de refroidissement (6) qui peut être facilement façonné, également par coulage, débouche dans au moins une cavité (4) ouverte vers le côté de sortie d'air (3), **caractérisée en ce que** le côté ouvert de la cavité (4) est recouvert d'un tissu métallique (7) résistant à la chaleur et perméable au gaz d'une certaine ouverture de maille et fixé solidairement et/ou par complémentarité de forme aux bords de la cavité, constituant ainsi un accumulateur de pression.

2. Structure selon la revendication n° 1, **caractérisée par** un découplage de matériaux entre le matériau du composant et le matériau du tissu métallique, sachant que le matériau du tissu métallique présente une résistance thermique plus élevée que le matériau du composant.

3. Structure selon la revendication n° 1, **caractérisée en ce que** l'ouverture géométrique de maille du tissu métallique (7) est choisie entre 5 et 95%.

4. Structure selon la revendication n° 3, **caractérisée en ce que** l'ouverture de maille du tissu métallique (7) est d'environ 20%.

5. Structure selon une des revendications n° 1 à n° 4, **caractérisée en ce que** le composant est une paroi (1) d'une chambre de combustion et que la cavité (4) est un canal en forme de rainure avec des orifices de refroidissement (6) répartis sur sa longueur, ce canal étant formé dans la surface intérieure de la paroi (1) et s'étendant le long de la circonférence intérieure de la chambre de combustion, ou que la cavité est formée de plusieurs canaux successifs avec des orifices de refroidissement débouchant dans ces canaux.

6. Structure selon la revendication n° 5, **caractérisée en ce que** plusieurs cavités (4) en forme de canaux sont conçues dans la paroi (1) en parallèle, l'une au-dessus de l'autre.

7. Structure selon la revendication n° 6, **caractérisée en ce que** la (les) cavité(s) (4) est (sont) formée(s) dans les épaulements (2) constitués par la paroi du composant à refroidir en forme de Z.
